Europäisches Patentamt

European Patent Office

Office européen des brevets

(11) Veröffentlichungsnummer: **0 044 273**

**A1**

(12) # EUROPÄISCHE PATENTANMELDUNG

(21) Anmeldenummer: **81810267.5**

(22) Anmeldetag: **29.06.81**

(51) Int. Cl.³: **F 24 J 3/02**

(30) Priorität: **01.07.80 CH 5057/80**

(43) Veröffentlichungstag der Anmeldung:
**20.01.82 Patentblatt 82/3**

(84) Benannte Vertragsstaaten:
**AT BE CH DE FR GB IT LI LU NL SE**

(71) Anmelder: **Aroka Holding AG**
**Althau 489**
**CH-5303 Würenlingen(CH)**

(72) Erfinder: **Heierli, Werner**
**Elsastrasse 6**
**CH-4600 Olten(CH)**

(74) Vertreter: **Hepp, Dieter et al,**
**Hepp & Partner AG Buebenloostrasse 22**
**CH-9500 Wil(CH)**

(54) **Absorberschicht.**

(57) Die Absorberschicht (2) besteht aus Teilchen mit unterschiedlicher Körnung. Dabei sind die Teilchen (3) mit gröberer Körnung wenigstens teilweise mit den Teilchen feinerer Körnung (4) bedeckt. Auf diese Weise wird eine Vielfachbrechung des einfallenden Lichts gewährleistet, wodurch der Absorptionsgrad erhöht wird. Die Absorberschicht lässt sich besonders vorteilhaft herstellen, wenn die Teilchen elektrostatisch aufgetragen werden. Dabei werden schwerere, also grössere Teilchen im elektrostatischen Feld stärker beschleunigt als leichtere, so dass die erfindungsgemäss vorgesehene Schichtung erzielt wird.

0044273

- 1 -

Aroka Holding AG, Würenlingen, Schweiz

---

Absorberschicht

---

Die Erfindung betrifft eine Absorberschicht zur Aufnahme und Umwandlung von Licht in Wärme.

Als Absorberschichten für die Umwandlung von Licht, insbesondere Tageslicht in Wärme, werden in der Regel schwarze Materialien und Stoffe wie Russ, Metall-Oxyde und dergleichen verwendet. Die schwarzen Stoffe und Materialien werden dabei in einer farbähnlichen Schicht auf die Absorberoberfläche, z.B. von Sonnenkollektoren, aufgetragen.

Obwohl bei den bekannten Absorberschichten bereits relativ hohe Absorptionsgrade erreicht werden, lässt sich erfindungsgemäss das Absorptionsvermögen weiter verbessern, wenn die Absorberschicht wenigstens eine Schicht von Absorberteilchen mit unterschiedlicher Körnung aufweist, wobei, vom Lichteinfall her gesehen, die Teilchen mit gröberer Körnung wenigstens teilweise mit den Teilchen feinerer Körnung bedeckt sind. Dadurch lässt sich

erreichen, dass einfallende Lichtstrahlen, welche von der Oberfläche der Absorberteilchen reflektiert werden, mehrfach zwischen den Absorberteilchen reflektiert werden, so dass der gesamthaft von der Absorber-Oberfläche reflektierte Anteil minimiert wird.

Besonders hohe Absorptionsgrade lassen sich erzielen, wenn die Absorberteilchen etwa pyramidenförmig ausgebildet sind und wenn der Flankenwinkel der Pyramiden etwa 60° beträgt. Auf diese

Weise wird sowohl zwischen den Teilchen feiner Körnung als auch zwischen den Teilchen der gröberen Körnung eine wenigstens zweifache Relexion erreicht, womit das Absorptionsverhalten verbessert wird.

Besonders gute Ergebnisse lassen sich erzielen, wenn der Kornabstand der Teilchen gröberer Körnung etwa 0,8 bis 0,9 m beträgt und wenn der Kornabstand der Teilchen mit feinerer Körnung etwa 0,2 bis 0,3 m beträgt. Die Absorberteilchen lassen sich besonders einfach in der gewünschten Weise herstellen, wenn sie aus gebrochenem Silicium-Carbid bestehen. Silicium-Carbid zerbricht im wesentlichen in Kleinstteilchen mit dem gewünschten Flankenwinkel, wenn es, z.B. in einer Kugelmühle, gebrochen (nicht jedoch gemahlen) wird.

Besonders vorteilhaft lässt sich die erfindungsgemässe Absorberschicht herstellen, wenn die Absorberteilchen mit einem Bindemittel vermischt und elektrostatisch auf die zu beschichtende Oberfläche aufgetragen werden. Dabei wird erreicht, dass die schwereren Teilchen, also die Teilchen mit der gröberen Körnung, im elektrostatischen Feld stärker beschleunigt werden als die kleineren Teilchen. Dadurch treffen die grösseren Teilchen zuerst auf der zu beschichtenden Oberfläche auf, so dass im Prinzip zunächst eine Beschichtung der Oberfläche mit den Teilchen gröberer Körnung und dann eine Beschichtung dieser Teilchen mit den Teilchen feinerer Körnung stattfindet.

Als Bindemittel können sowohl flüssige als auch pulverförmige Stoffe verwendet werden.

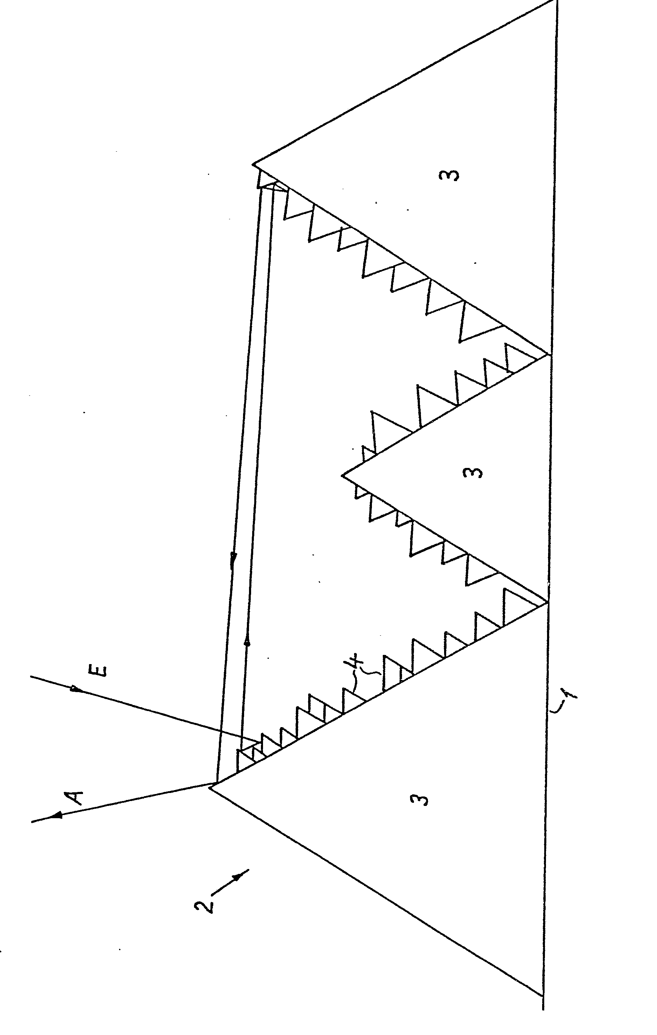

Die einzige Figur zeigt ein Ausführungsbeispiel, bei welchem ein Absorber 1 mit einer Absorberschicht 2 bedeckt ist, die aus Absorberteilchen aus Siliciumcarbid besteht. Die Teilchen 3 weisen dabei ersichtlicherweise eine wesentlich gröbere Körnung als die Teilchen 4 auf, welche die Teilchen 3 bedecken. Der schematisch dargestellte Strahlenverlauf mit einem einfallenden Lichtstrahl E und einem ausfallenden Lichtstrahl A zeigt, wie durch
die Anordnung der Teilchen unterschiedlicher Körnung eine Vielfach-Reflexion des Lichtstrahls im Labyrinth der Teilchen unterschiedlicher Körnung erfolgt. Der austretende Lichtstrahl A ist
aufgrund der Mehrfach-Reflexion eine theoretische Grösse, da
durch die Mehrfach-Reflexion eine praktisch vollständige Absorption des Lichts erfolgt.

Ersichtlicherweise lässt sich das dargestellte Labyrinth auf
einfachste Weise herstellen und auch an beliebige Einfallwinkel
derart anpassen, dass Vielfach-Reflexion zuverlässig erfolgt.

PATENTANSPRÜCHE

1. Absorberschicht zur Aufnahme und Umwandlung von Licht in Wärme, d a d u r c h   g e k e n n z e i c h n e t, dass sie wenigstens eine Schicht von Absorberteilchen mit unterschiedlicher Körnung aufweist, wobei die Teilchen mit gröberer Körnung wenigstens teilweise mit den Teilchen feinerer Körnung bedeckt sind.

2. Absorberschicht nach Anspruch 1, d a d u r c h   g e - k e n n z e i c h n e t, dass die Absorberteilchen etwa pyramidenförmig ausgebildet sind.

3. Absorberschicht nach Anspruch 2, d a d u r c h   g e - k e n n z e i c h n e t, dass der Flankenwinkel der Pyramiden etwa 60⁰ beträgt.

4. Absorberschicht nach einem der vorangehenden Ansprüche, d a d u r c h   g e k e n n z e i c h n e t, dass der Kornabstand der Teilchen gröberer Körnung etwa 0,8 bis 0,9 um beträgt und dass der Kornabstand der Teilchen mit feinerer Körnung etwa 0,2 bis 0,3 um beträgt.

5. Absorberschicht nach einem der vorangehenden Ansprüche, d a d u r c h   g e k e n n z e i c h n e t, dass sie Teilchen aus gebrochenem Siliciumcarbid aufweist.

6. Verfahren zum Auftragen einer Absorberschicht nach Anspruch 1, d a d u r c h   g e k e n n z e i c h n e t, dass zum Aufbau einer Absorptionsschicht, bei welcher Teilchen der Grobkörnung unter den Teilchen der Feinkörnung liegen, die Absorberteilchen mit einem Bindemittel vermischt und elektrostatisch auf die zu beschichtende Oberfläche aufgetragen werden.

0044273

- 5 -

7. Verfahren nach Anspruch 6, d a d u r c h   g e k e n n -
   z e i c h n e t,  dass das Bindemittel flüssig ist.

8. Verfahren nach Anspruch 6, d a d u r c h   g e k e n n -
   z e i c h n e t,  dass das Bindemittel pulverförmig ist.

A

E

2

3

4

3

3

3

1

1/7

0044273

Europäisches
Patentamt

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 709 239 (ELTREVA)<br>* Seite 4, letzter Absatz; Seite 5, Absätze 1-3 *<br>-- | 1,6,8 | F 24 J 3/02 |
| | DE - A - 2 656 490 (FISCHER)<br>* Anspruch 1; Seite 11, letzter Absatz; Seite 12, Absätze 1, 2 *<br>-- | 1,7 | |
| | DE - A - 2 604 019 (PHILIPS)<br>* Ansprüche 1,2 *<br>-- | 1,4 | **RECHERCHIERTE SACHGEBIETE (Int. Cl.⁺)**<br><br>F 24 J<br>C 09 D |
| | NL - A - 72 09933 (MARKS)<br>* Seite 5, Zeilen 13-28; Seite 7, Zeilen 7-24; Figur 3 *<br>-- | 1,5 | |
| A | DE - A - 2 838 284 (SEEGER)<br>* Insgesamt *<br>-- | | |
| A | FR - A - 2 392 332 (DECAVEL)<br>* Insgesamt *<br>---- | | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 13-10-1981 | PERROTTA |

EPA form 1503.1   06.78